# EUROPEAN PATENT SPECIFICATION

(11) **EP 1 525 804 B1**
(45) Date of publication and mention of the grant of the patent: **09.07.2008**
(21) Application number: 04104881.0
(22) Date of filing: 05.10.2004
(51) Int. Cl.: A23L 1/00, A23B 4/30, A23P 1/08, B26D 7/27, B05B 5/00, B05B 9/04

(54) **Product coating method and apparatus**
Beschichtungs-Verfahren und -Vorrichtung
Procédé et installation pour application d'une couche sur un produit

(30) Priority: 10.10.2003 GB 0323710
(43) Date of publication of application: 27.04.2005
(73) Proprietor: Spice application systems LTD, Oxford, Oxfordshire OX4 4GH (GB)
(72) Inventor: King, Peter, OX4 4YQ Oxford (GB)
(74) Representative: Lind, Robert

(56) References cited:
- EP-A- 0 923 872
- GB-A- 191 300 037
- US-A- 3 638 521
- US-A- 4 414 232
- US-A1- 2001 026 824
- US-A1- 2003 035 872
- PATENT ABSTRACTS OF JAPAN vol. 2000, no. 14, 5 March 2001 (2001-03-05) & JP 2000 317770 A (TACO CO LTD), 21 November 2000 (2000-11-21)

## Description

The present invention relates to a method and apparatus for flavouring food products and is applicable in particular, though not necessarily, to a method and apparatus for flavouring sliced food products.

There exist a wide variety of products which require to be coated with a substance (e.g. slurry, powder, liquid, suspension, etc) during their preparation. For example, processed meats are often prepared as lengths of meat requiring slicing and flavouring. It is generally desirable to be able to achieve a uniform and controllable flavouring throughout a product. It is also desirable to be able to minimise wastage of the flavouring, and to reduce the dispersion of the substance into the environment around the products.

Typically, a method for impregnating processed meats with flavouring involves cooking the meat with the flavouring, thereby imparting the flavour to the meat. It is sometimes necessary to store the product for a period of from six months to one year before it is ready to use. The inability to produce meats having a desired flavouring for immediate supply is an inherent disadvantage of this method.

There has recently been interest in applying flavouring in the form of a coating, whereby a flavouring liquid is applied to a product's exterior, the liquid impregnating the product over a short period of time and thus conveying the flavouring throughout the product.

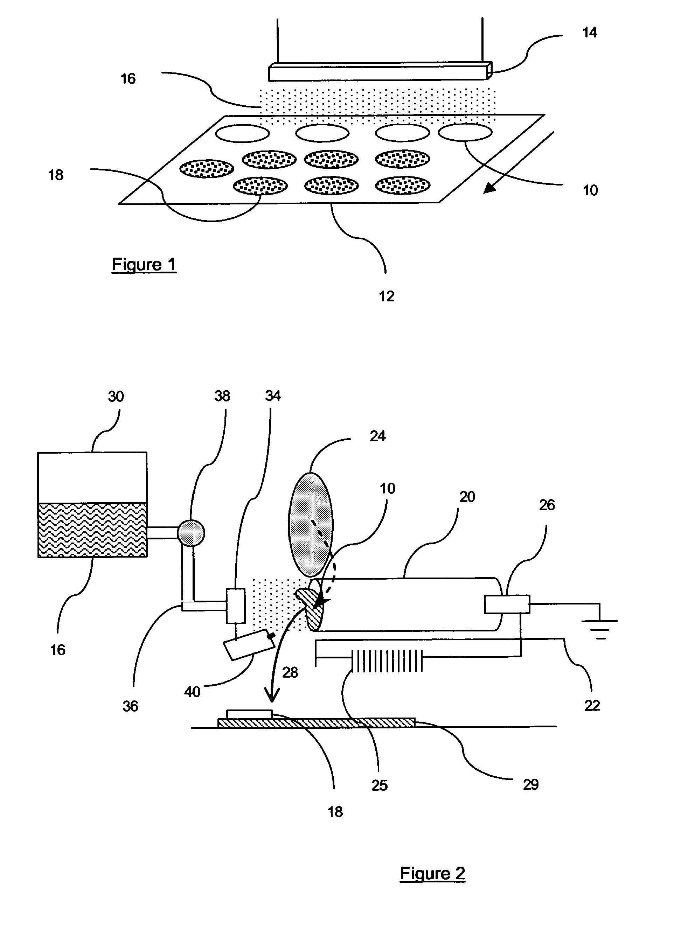

Consumers may purchase processed meats in pre-packed sliced form. It is often preferable that the sliced meat is flavoured. When applying a flavouring to a sliced food product with a coating method as outlined in the previous paragraph, and in particular to sliced processed meats, it is generally only necessary to apply the flavouring to one surface of the slices, the flavouring being absorbed through the slice after application. Figure 1 of the accompanying drawings shows a possible system for applying flavouring to slices 10 of a food product. Slices 10 are disposed upon a moving conveyor surface 12, passing beneath the output of a fixed coating dispenser 14 positioned above the conveyor surface. The coating dispenser 14 releases the flavouring 16 to fall under gravity onto the moving conveyor 12 and onto one side of the slices 10. However the slices 10 are positioned on the conveyor, it is likely that there will be a high level of wasted product, with the flavouring 16 being deposited on the conveyor surface 12 rather than the sliced product. The conveyor surface 12 then becomes contaminated with the flavouring 16, requiring cleaning each time a different flavouring is to be used, once more resulting in increased operating costs and decreased productivity due to excessive downtime.

GBN00037A describes a method and apparatus for preparing sheets from crude rubber and describes the provision of a means for spraying the sheets with a water or other liquid.

US4,414,232 describes a curing process for bacon and in particular to a process for adding a smoke flavour to bacon slices.

EP0923872 describes a method and apparatus for producing cooked bacon slices. Slices are sprayed with a curing solution prior to cooking.

According to a first aspect of the present invention, there is provided a method of flavouring slices of a food product, the method comprising spraying flavouring onto an end face of an elongate product during slicing at the end face.

The present invention is applicable in particular to the coating of processed meat products with flavouring in the form of liquid (e.g. an oil-based flavouring) or slurry. However, the invention may also be used to coat other products. The invention may also be used to coat products with other substances including, for example, powders and suspensions.

The flavouring may be sprayed through a misting nozzle.

Preferably, the method further includes the step of applying an electric field in order to charge the flavouring. More preferably, the food product is coupled to a potential, whereby the charged flavouring spray is attracted to the end face.

The flavouring spray may be substantially confined within a fixed region adjacent to the end face of the product. Preferably, the cross-sectional shape of the fixed region corresponds substantially to the cross-sectional shape of the product.

According to a second aspect of the present invention there is provided apparatus for flavouring a product, the apparatus comprising:
means for slicing the product; and
means for spraying a flavouring onto an end face during slicing at that end face and comprising a misting nozzle and means for introducing the flavouring adjacent to the misting nozzle,
   **characterised in that** the means for spraying further comprises
an electrode attached to or located adjacent to the misting nozzle, and means for charging the electrode,
wherein in use the electrode provides an electric field which may be used to charge the flavouring.

Preferably, the means for introducing the flavouring to the misting nozzle is a peristaltic pump.

The means for spraying may also comprise confinement means for confining the spray in the region adjacent to the product. Preferably, the cross-sectional shape of the confinement means corresponds substantially to the cross-sectional shape of the product.

For a better understanding of the present invention and in order to show how the same may be carried into effect, reference will now be made, by way of example, to the accompanying drawings in which:
Figure 1 illustrates a prior art apparatus for flavouring a sliced food product with a flavouring;
Figure 2 illustrates in cross-section apparatus for flavouring a sliced food product with a flavouring according to a first embodiment of the present invention;
Figure 3 illustrates a nozzle and nozzle mounting member of the apparatus of Figure 2;
Figure 4 is a flow diagram illustrating a method of flavouring a sliced food product;
Figure 5 illustrates in perspective view apparatus for flavouring a sliced food product according to a still further embodiment of the present invention; and
Figures 6a to 6c illustrate in partial plan view apparatus for flavouring a sliced food product according to a further embodiment of the present invention.

Figure 1 has already been described above in relation to a known apparatus for application of a coating substance to a sliced food product.

There is illustrated in Figure 2 apparatus for coating a sliced food product with a flavouring according to a first embodiment of the present invention. For the purpose of illustration, it is assumed here that the food product is a length of processed meat, although other products may be used. The length of meat 20 is positioned upon a surface 22 and is secured to the conveyor by means of a securing mechanism 26. The securing mechanism 26 is connected to a biasing means 25 that introduces the length of meat to the slicing tool 24. The slicing tool 24 is a rotary blade, capable of cutting several slices per second. The motion of the slicing tool 24 is indicated by the dotted arrow. The biasing means 25 may, for example, comprise a spring or a piston and cylinder arrangement. The securing mechanism 26 is connected to ground potential. The slicing tool 24 cuts slices 10 of processed meat as the length of meat 20 is introduced to the slicing tool 24 by the biasing means 25. The slices 10 fall under gravity, as indicated by the arrow 28, towards a moving conveyor upon which packaging 29 is disposed.

A container 30 stores the flavouring 16. In this embodiment, the flavouring 16 is liquid, although it may alternatively comprise a slurry. Connected to the container 30 is tubing 36 which conveys the flavouring 16 from the container 30 to a misting nozzle 34 by means of a pump 38. Pump 38 comprises a peristaltic pump, although other types of pump may be used.

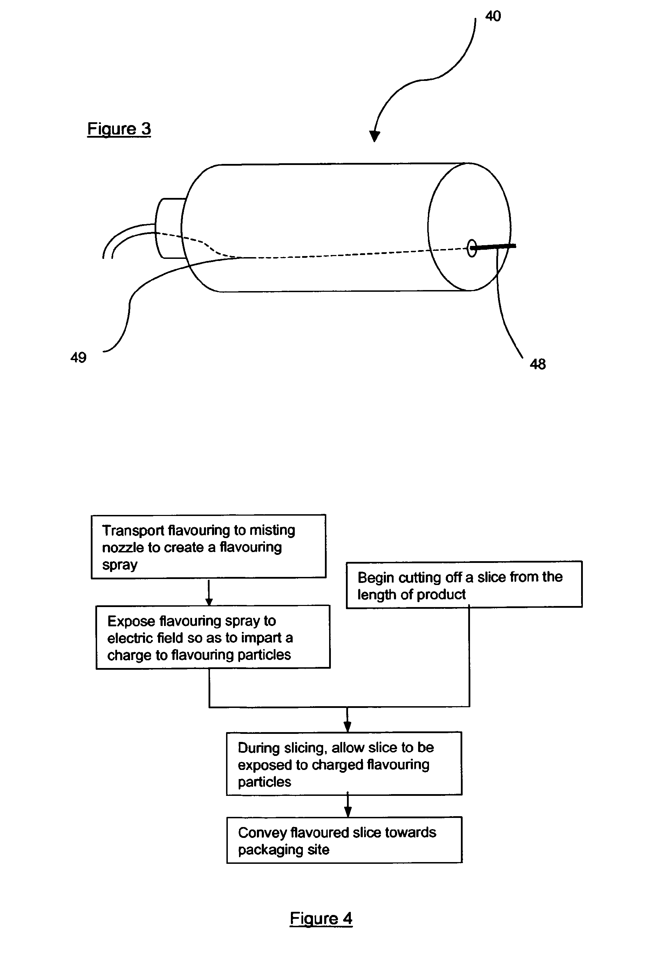

An electrode housing 40 is located adjacent to the misting nozzle 34, and is illustrated in more detail in Figure 3. The electrode housing 40 comprises a single moulded piece of plastic material. Disposed within the housing 40 is a needle electrode 48. The electrode 48 is coupled via a conductor 49 to a high voltage charging circuit (for example a cascade arrangement). In use, the electrode 48 is charged up to a voltage of around 85KV, thereby creating an electric field in its vicinity.

Having explained the structure of the apparatus with reference to Figures 2 and 3, the operation of the apparatus will now be described. The pump 38 draws flavouring 16 from the container 30 through tubing 36 towards the misting nozzle 34. The misting nozzle 34 forms a spray from the flavouring 16, dispersing the liquid into droplets.

The spray of droplets becomes charged when subjected to the electric field created by the charged electrode 48. It is noted that smaller droplets accept a charge more easily than larger droplets. The charged flavouring droplets are sprayed onto the end face of the product while it is still joined to the product. The flavouring permeates the slices whilst the packaged products are in transit to the end user.

The securing mechanism 26 is grounded, and therefore the slice 10, before the slicing tool 24 has fully cut the slice from the body of the product 20, will also be grounded. The charged flavouring droplets will therefore be accelerated towards the partly-cut slice, landing on the slice and substantially coating at least the end face of the slice in a generally uniform manner. Due to the electrostatic forces, even the inward-facing surface and edges of the slice will tend to be coated to a certain extent. Providing the misting nozzle 34 close to the point at which the slices are cut improves the efficiency of the flavouring process. The method described above is further illustrated in the flow diagram of Figure 4.

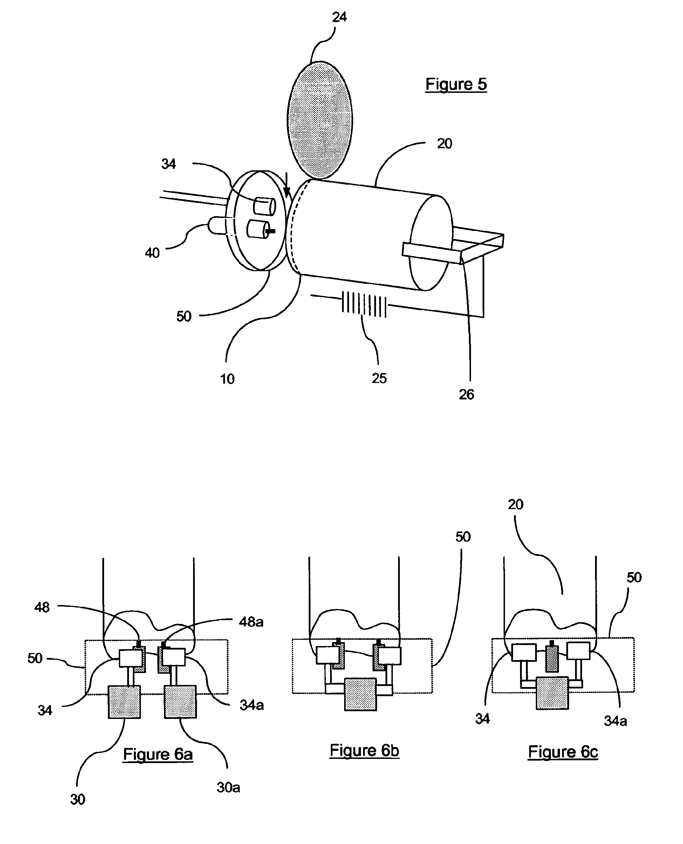

In order to minimise contamination of equipment, thereby improving turnaround time between changing flavourings, and to reduce wastage of the flavouring, a hood 50 may be provided at the misting nozzle 34, as illustrated in Figure 5 of the accompanying drawings in accordance with a further embodiment of the present invention. Both the electrode housing 40 and the misting nozzle 34 are substantially housed within the hood 50. The hood 50 is provided immediately adjacent to the slicing tool 24 so that, in use, the charged flavouring droplets are immediately adjacent to the partly-cut grounded slice, therefore significantly reducing the amount of wasted flavouring. The shape of the hood may substantially correspond to the shape of the cross-section of the product in order to further minimise waste of the flavouring and improve the coverage of flavouring.

It may be necessary to employ more than one source of flavouring, as illustrated in Figures 6a to 6c of the accompanying drawings, constituting a further embodiment of the present invention. The shape of the falling slice 10 may be such that in order to ensure an even coverage of the end face with the flavouring, a single misting nozzle and electrode are insufficient. Figure 6a shows two containers 30, 30a for storing flavouring which is sprayed through two corresponding misting nozzles 34, 34a and charged by two electrodes 48, 48a respectively. Each misting nozzle 34, 34a is directed towards a different area of the end face of the product to ensure maximal coverage with the flavouring. Figure 6b shows a similar arrangement to that shown in Figure 6a, except that the two misting nozzles 34, 34a are supplied by only one container 30. There are still two electrodes 48, 48a, one each for the respective misting nozzles. In the embodiment shown in Figure 6c, again one container 30 supplies flavouring to two misting nozzles 34, 34a. The embodiment of Figure 6c differs in that only one electrode provides the electric field for charging the flavouring spray. It has been found that one electrode can produce an electric field of sufficient strength to charge sprays emanating from two separate misting nozzles. In each of the embodiments shown in Figures 6a to 6c, every electrode 48, 48a and misting nozzle 34, 34a is housed within a hood 50 whose cross-sectional shape corresponds substantially to the cross-sectional shape of the product 20.

It will be appreciated that the apparatus and method described above do not require any small aperture components, e.g. Venturi tubes, slots, or holes, through which the coating substance must pass. There is therefore little likelihood of components becoming blocked, resulting in less downtime and higher productivity.

## Claims

1. A method of flavouring slices of a food product, the method comprising spraying flavouring onto an end face of an elongate product during slicing at the end face.

2. A method according to claim 1, wherein the flavouring is a liquid or slurry flavouring.

3. A method according to claim 2, comprising spraying the flavouring through a misting nozzle.

4. A method according to any preceding claim, further comprising the step of applying an electric field in order to charge the flavouring.

5. A method according to claim 4, wherein the food product is held at a potential, so that the charged flavouring is attracted to the end face.

6. A method according any preceding claim, wherein the flavouring spray is substantially confined within a fixed region adjacent to the end face of the product.

7. A method according to claim 6, wherein the cross-sectional shape of the fixed region corresponds substantially to the cross-sectional shape of the product.

8. Apparatus for flavouring a product, the apparatus comprising:
means (24) for slicing the product; and
means (40) for spraying a flavouring onto an end face during slicing at that end face and comprising a misting nozzle (34) and means (36,38) for introducing the flavouring adjacent to the misting nozzle,
**charaterised in that** the means (40) for spraying further comprises
an electrode (48) attached to or located adjacent to the misting nozzle, and means (49) for charging the electrode,
wherein in use the electrode (48) provides an electric field which may be used to charge the flavouring.

9. Apparatus according to claim 8, wherein the means (36,38) for introducing the flavouring adjacent to the misting nozzle comprises a peristaltic pump (38).

10. Apparatus according to any one of claims 8 or 9, wherein the means for spraying comprises confinement means (50) for confining the spray in the region adjacent to the product.

11. Apparatus according to claim 10, wherein the cross-sectional shape of the confinement means (50) corresponds substantially to the cross-sectional shape of the product.

## Patentansprüche

1. Verfahren zum Würzen von Scheiben eines Lebensmittelproduktes, wobei das Verfahren das Aufsprühen der Würze auf eine Endfläche eines länglichen Produktes während des Scheibenschneidens an der Endfläche aufweist.

2. Verfahren nach Anspruch 1, bei dem die Würze eine flüssige oder aufgeschlämmte Würze ist.

3. Verfahren nach Anspruch 2, das das Aufsprühen der Würze mittels einer Sprühdüse aufweist.

4. Verfahren nach einem der vorhergehenden Ansprüche, das außerdem den Schritt des Anwendens eines elektrischen Feldes aufweist, um die Würze aufzuladen.

5. Verfahren nach Anspruch 4, bei dem das Lebensmittelprodukt auf einem Potential gehalten wird, so dass die aufgeladene Würze zur Endfläche angezogen wird.

6. Verfahren nach einem der vorhergehenden Ansprüche, bei dem das Würzsprühmittel im Wesentlichen innerhalb eines unveränderlichen Bereiches benachbart der Endfläche des Produktes begrenzt wird.

7. Verfahren nach Anspruch 6, bei dem die Querschnittsform des unveränderlichen Bereiches im Wesentlichen der Querschnittsform des Produktes entspricht.

8. Vorrichtung für das Würzen eines Produktes, wobei die Vorrichtung aufweist:
ein Mittel (24) für das Schneiden des Produktes in Scheiben; und
ein Mittel (40) für das Aufsprühen der Würze auf eine Endfläche während des Scheibenschneidens an jener Endfläche, und die eine Sprühdüse (34) und ein Mittel (36, 38) für das Einbringen der Würze benachbart der Sprühdüse aufweist,
**dadurch gekennzeichnet, dass** das Mittel (40) für das Aufsprühen außerdem aufweist:
eine Elektrode (48), die an der Sprühdüse befestigt oder benachbart dieser angeordnet ist; und
ein Mittel (49) für das Aufladen der Elektrode,
wobei bei Benutzung die Elektrode (48) ein elektrisches Feld liefert, das verwendet werden kann, um die Würze aufzuladen.

9. Vorrichtung nach Anspruch 8, bei der das Mittel (36, 38) für das Einbringen der Würze benachbart der Sprühdüse eine Schlauchpumpe (38) aufweist.

10. Vorrichtung nach einem der Ansprüche 8 oder 9, bei der das Mittel für das Aufsprühen ein Begrenzungsmittel (50) für das Begrenzen des Sprühmittels im Bereich benachbart dem Produkt aufweist.

11. Vorrichtung nach Anspruch 10, bei der die Querschnittsform des Begrenzungsmittels (50) im Wesentlichen der Querschnittsform des Produktes entspricht.

## Revendications

1. Procédé d'aromatisation de tranches d'un produit alimentaire, le procédé comprenant la pulvérisation d'un aromatisant sur une face d'extrémité d'un produit allongé au cours du découpage en tranches au niveau de la face d'extrémité.

2. Procédé selon la revendication 1, dans lequel l'aromatisant est constitué par un aromatisant liquide ou sous forme de coulis.

3. Procédé selon la revendication 2, comprenant l'étape de pulvérisation de l'aromatisant à travers une buse de pulvérisation en brouillard.

4. Procédé selon l'une quelconque des revendications précédentes, comprenant en outre l'étape d'application d'un champ électrique en vue de charger l'aromatisant.

5. Procédé selon la revendication 4, dans lequel le produit alimentaire est maintenu à un potentiel, de sorte que l'aromatisant chargé est attiré vers la face d'extrémité.

6. Procédé selon l'une quelconque des revendications précédentes, dans lequel le spray aromatisant est pratiquement confiné dans une région fixe adjacente à la face d'extrémité du produit.

7. Procédé selon la revendication 6, dans lequel la forme de section transversale de la région fixe correspond pratiquement à la forme de section transversale du produit.

8. Dispositif d'aromatisation d'un produit, le dispositif comprenant :
un moyen (24) pour découper le produit en tranches ; et
un moyen (40) pour pulvériser un aromatisant sur une face d'extrémité au cours du découpage en tranches au niveau de cette face d'extrémité, et comprenant une buse de pulvérisation en brouillard (34) et un moyen (36, 38) pour introduire l'aromatisant près de la buse de pulvérisation en brouillard ;
**caractérisé en ce que** le moyen (40) de pulvérisation comprend en outre
une électrode (48) fixée sur la buse de pulvérisation en brouillard ou agencée près de celle-ci, et un moyen (49) pour charger l'électrode ;
l'électrode (48) produisant en service un champ électrique pouvant servir à charger l'aromatisant.

9. Dispositif selon la revendication 8, dans lequel le moyen (36, 38) servant à introduire l'aromatisant près de la buse de pulvérisation en brouillard comprend une pompe péristaltique (38).

10. Dispositif selon l'une quelconque des revendications 8 ou 9, dans lequel le moyen de pulvérisation comprend un moyen de confinement (50) pour confiner le spray dans la région adjacente au produit.

11. Dispositif selon la revendication 10, dans lequel la forme de section transversale du moyen de confinement (50) correspond pratiquement à la forme de section transversale du produit.
